# EUROPEAN PATENT APPLICATION

(11) **EP 4 692 153 A1**
(43) Date of publication of application: **11.02.2026**
(21) Application number: 24783936.8
(22) Date of filing: 08.04.2024
(51) Int. Cl.: C08G 59/18, C09D 163/00

(54) **POLYMER MATRIX-MODIFYING COMPOSITION WITH ANTI-CORROSIVE, BIOCIDAL AND MECHANICAL PROPERTY-ENHANCING PROPERTIES**

(30) Priority: 06.04.2023 CL 202301015
(71) Applicant: Soquimat SpA, Concepción (CL)
(72) Inventor: BARROS ARRIAGADA, Patricia, 2358 Concepción (CL); TOLEDO CARRILLO, Esteban, 2358 Concepción (CL); DÍAZ GÓMEZ, Andrés, 2358 Concepción (CL); GODOY TAPIA, Mytzy, 2358 Concepción (CL)
(74) Representative: Elzaburu S.L.P.
(86) International application number: PCT/CL2024/050029
(87) International publication number: WO 2024/207130

(57) **Abstract**

Polymeric matrix modifying composition, with anticorrosive, biocide and mechanical property enhancing properties, which comprises between 50 and 99% of an organic fraction made of lignin, which is chosen between organosolv lignin, Kraft lignin, soda lignin, and/or its derivatives; between 1 and 40% of bivalent or trivalent inorganic cations; and between 0 and 10% of formulation aids. Its method for obtaining and its use to provide anticorrosive, biocidal and/or mechanical properties to polymeric matrices, when the composition is mixed homogeneously with the polymer matrix before curing, in a final proportion of between 0.1 and 5 % w/w with respect to the polymer matrix.

## Description

### BACKGROUND TO THE INVENTION

Polymeric matrices are a group of synthetic polymers with multiple applications today. Broadly speaking, they can be divided into thermoplastic and thermosetting polymers. Thermosetting polymers include epoxy, polyurethane, acrylic, phenolic resins, among others, while thermoplastics can be found PLA, nylon. ABS, polycarbonates, polyethylene (PE, HDPE, LDPE), polypropylene (PP), polyethylene terephthalate (PET), among many others with diverse industrial and domestic applications.

Despite their immense usefulness, polymer matrices lack some properties that can be very convenient in many of the applications of polymeric matrices. For example, in the case of polymer resins, it is highly desirable that paints or varnishes have anticorrosive and/or biocidal properties, in order to prolong the useful life of the object coated with the resin. In many cases, the fact that the resin is harder when dry is also a highly desirable attribute.

The same applies to various plastics, where it is desirable that the polymeric material protects metals in contact with it from corrosion or has biocidal properties, that prevent the formation of biofilm on the material, or simply that by biocidal effect it keeps objects or surfaces sanitized.

The inventors have developed an additive composition for polymeric matrices that gives them anti-corrosion properties, biocidal properties and improves their mechanical capabilities.

Corrosion is the spontaneous chemical and/or electrochemical process by which metallic materials deteriorate when in contact with a corrosive environment (air, humidity, soil, vapor, etc.), due to the unstable nature of the metallic elements. The deterioration of metal structures through corrosion entails direct and indirect environmental, economic and safety costs for people, which have been estimated to amount to approximately 2.5 trillion dollars per year, which represents 3.4% of the gross domestic product worldwide, according to the *IMPACT Study* reported by *NACE International.* Moreover, between 15 to 35% of these costs can be avoided through the management and implementation of corrosion control measures.

Control measures include the use of corrosion-resistant alloys, cathodic or anodic protection and/or the use of organic and inorganic coatings, in order to hinder or prevent either the anodic or cathodic reactions or both. One of the most effective methods is the use of organic coatings or a coating scheme. Organic coatings are mainly composed of pigments, rheological modifiers, functional additives and a binding material, which corresponds to the polymeric matrix (acrylic, epoxy, polyurethane, polyurea, among others) responsible for generating a continuous film in which the additives are homogeneously distributed.

Among the additives are corrosion inhibitors, one of the main and most efficient used by the coatings industry, are those based on chromates. These act by surface passivation through the formation of compact and adherent oxides by reducing hexavalent chromium species to trivalent chromium, due to their oxidizing power. Its wide use is due to its flexibility and versatility to inhibit corrosion under various conditions (corrosive medium, pH, temperature, etc.), as well as its advantageous cost-benefit ratio. Despite its successful use in coatings, the World Health Organization released a series of studies conducted worldwide by various independent entities since 1972 that presented a carcinogenic effect in chromium compounds. On the other hand, in 2006, a European regulation REACH (Registration, *Evaluation, Permit and Restriction of Chemicals)* was created that presents requirements to industries in the use of hazardous substances and their associated risks. In this way, the use of chromate in the coatings industry was prohibited with the exception of its uses in aeronautical and military applications, for which exclusive authorization granted by the ECHA (*European Chemical Agency*) is required. Similarly, the case of lead-based inhibitors, which have also been withdrawn from industrial use in coatings and paints due to their high toxicity. These restrictions have prompted the search for new inhibitors that have a compromise between good inhibitory performance, as well as low toxicity and low potential for environmental damage. In place of these compounds, the use of inorganic compounds such as phosphates, vanadates, molybdates, and silicates has been implemented, which have a lower inhibitory capacity, so they are incorporated in higher percentages, as part of anticorrosive formulations.

On the other hand, it is known that surfaces and inanimate objects can be contaminated and even in some conditions, colonized by various microorganisms, such as pathogenic bacteria. It is desirable that materials in regular contact with people or animals have biocidal properties that allow for maintaining a sanitized environment, with less probability of transmission of diseases caused by bacteria. External cleaning compositions are currently used as sanitizers and some metal nanoparticles with this effect have also been used in some materials, the most commonly used being copper and silver nanoparticles.

Finally, it is always highly desirable to improve the mechanical properties of polymeric matrices to give these materials greater durability in their function. For example, a paint that is exposed to wear and tear due to abrasion or erosion can lose its surface protection capacity due to material loss, this being a very common case in industrial applications or in components exposed to high traffic.

Therefore, each of these properties has been studied and there are various technologies to address each of these challenges in the improvement of polymeric matrices. However, the invention addresses all these aspects together in a way not anticipated in the state of the art, by employing modified lignin in combination with a bivalent or trivalent cation.

### STATE OF THE ART

Some technologies linked to the present invention are detailed below:
Patent application WO2017/064499 (Dodds et al.) called "Corrosion inhibiter". The use of corrosion inhibitors based on azole organic compounds and, in particular, the use of benzotriazole to obtain the benzotriazolate ion by deprotonation, which is retained by an ion exchange resin for controlled release, is protected. The aromatic structure of benzotriazole, in which the five-element ring has three nitrogens, has great affinity with the metal surface, forming complexes of great stability, which also promote the adhesion of polymeric coatings. This inhibitor acts mainly as an adjunct to the use of phosphates. This document does not anticipate the formulation of the invention.

The application US2795564A discloses aqueous paint bases and water-based paints and a process to prepare them where sodium lignin sulfonate is used in the examples. The use of lignin in this case is for dispersion of a water-based formulation, where the lignin is used as a surfactant, which is not related to the application or properties of the lignin that are exploited in our invention. Without wanting to limit ourselves by the theory, using bivalent or trivalent cations instead of sodium modifies the properties of the composition of the invention. As can be seen in example 4 of the invention. Additionally, it is not obvious that an additive used as a surfactant in an aqueous medium can be useful in a polymeric matrix, which is explained by the difference in its composition. The composition of the invention is not soluble in polar solvents, such as water.

The patent CN108587405A describes the formulation of a zinc-rich, water-based coating incorporating Kraft lignin. In this case, zinc is incorporated in a metallic state to act as a sacrificial material at the time of corrosion. This type of coating is fairly standard in the industry, usually used as a primer in paint schemes. In the case of lignin, it is used as part of the curing agent of the resin and not as a functional additive within the formulation.

That is to say, although the patent does CN108587405A include elements close to the formulation of the invention, it does not anticipate it.

This shows that, despite the advances in non-toxic materials, there is still a need to develop more efficient, economically viable and non-harmful alternatives for health and the environment. Where this need is addressed and solved by the present invention.

### BRIEF DESCRIPTION OF THE FIGURES

Figure 1: Micrography by scanning electron microscopy of organometallic zinc compound.
Figure 2: Infrared spectrum of the lignin precursor and the organometallic zinc complex.
Figure 3: Raman spectrum of the organometallic zinc complex.
Figure 4: Photograph of panels exposed in a salt spray chamber for 336 hours, coated with a) Control Formulation b) Formulation LgZn-0.5 and c) Formulation LgZn-1.0
Figure 5: Bode diagram for specimens coated with the Target Formulation and LgZn-1.0.

### DESCRIPTION OF THE INVENTION

This technology corresponds to a polymeric matrix modifying composition, with anticorrosive properties, biocidal properties and improved mechanical properties.

Lignin is the second most abundant biopolymer after cellulose and is mainly found in plant structures, acting as an adhesive for fibers in plants and trees. But despite its abundance and high industrial production (mainly as a bi-product of the pulp production process), less than 2% of it is used to manufacture value-added products, being used mainly as fuels in recovery boilers where black liquor is burned to generate energy. Separating and obtaining it from cellulose is carried out to date through 4 different processes, of which 2 of them are based on the use of sulfur, Kraft lignin and lignosulfonate, and two others are sulfur-free processes, Organosolv Lignin and Alkaline Lignin. It is worth mentioning that to date there is no pure or native lignin available, since all the processes of obtaining it involve modifications in its molecular structure. Of these 4 types of lignin, lignosulfonate, which is completely soluble in water, cannot be used in the invention, and the other 3, which are soluble in alkaline pH, can be used. Below, we will briefly describe them:
Kraft lignin - KL: It is obtained by depolymerization of lignin for the extraction of cellulose and hemicellulose by using NaOH and NaS at high pressure and temperature (>170~C) through the digestion of wood chips (typically pine or eucalyptus). During digestion, lignin and hemicellulose degradation is produced in smaller chains, due to the nucleophilic attack of S²⁻ ions. As a result, a solution of black liquor with Kraft lignin content >15% in a solution with pH 13-14 is obtained. The structure of lignin is modified by incorporating HS groups in addition to the abundant OH groups.

The main properties of Kraft lignin are as follows.
Molecular Weight: 200 - 20000 Da

Partially soluble in water, Soluble in alkaline solution.

Lignosulfonate - LS: It is obtained by a process similar to the Kraft process, using high temperatures and pressures, as well as S²⁻ and HS- ions, with the difference that this is done at a pH between 1.5 and 5. During the process, similar breakage of ether bonds occurs, generating HSO₃⁻, which is also incorporated into the lignin structure, leaving terminations with sulfonate groups.

Its main properties are:
Molecular Weight: 15000 - 60000 Da
Water Soluble

Organosolv lignin: It is obtained by using organic solvents to solubilize lignin. When using solvents such as acetone, methanol, ethanol, butanol or formic acid, the hydrolytic breakdown of the aryl-ether bonds occurs, which solubilizes fragments of lignin while maintaining a higher purity compared to sulfur-based processes. The fragmented lignin is then recovered by dilution with acidified water, producing the precipitation of the lignin to then be filtered and separated.

Its main properties are:
Molecular Weight: 2000 - 9000 Da
Partially soluble in water, Soluble in alkaline solution.

Alkaline Lignin or Soda Lignin: It is obtained from an alkaline solution of NaOH with the addition of anthroquinone. This process is commonly used for straw and other types of hardwood. During the process, lignin condensation and degradation occurs, so the size of the chains depends to a large extent on the retention time.

Its main properties are:
Molecular Weight: 800 - 3000 Da

Partially soluble in water, Soluble in alkaline solution.

It is important to note that regardless of the nature of the lignin, all of them have hygroscopic properties due to the presence of phenol groups, which reduces the barrier effect of corrosion-inhibiting pigments/additives, by creating preferential channels for the diffusion of water through the film.

In this way, the invention refers more particularly to a composition, modifying polymeric matrices, which includes:
between 50 - 99% of an organic fraction whose molecular structure corresponds to modified lignin, which is chosen from organosolv lignin, Kraft lignin, soda lignin, or one of their derivatives; and
between 1 and 40% of an inorganic fraction composed of one or more bivalent or trivalent inorganic cations, such as: Ca, Mg, Zn, Fe, Al, Cu, Ni, Mo, and/or Mn;
between 0 and 10% of formulation aids.

Among the formulation aids, glycols, acids and bases stand out, whose function in all of them is the solubilization of lignin by deprotonation, thus facilitating the formation of the organometallic compound of the composition of the invention. In addition, other dispersing or stabilizing compounds can be used.

Advantageously, the modifying composition of polymeric matrices of the invention presents low toxicity for humans and a low potential for contamination or damage to the environment, due to the vegetable origin of its main component and the inhibition of potential leaching of cations, due to the chelating capacity of lignin and its derivatives. A bioassay was carried out to evaluate the toxicity composition of the invention, in the freshwater fish model *Danio rerio,* using the standard for determining the acute toxicity of wastewater on zebrafish eggs (*Danio rerio*)"*.* The results showed that the composition of the invention has a lethal concentration that causes mortality in 50% of the population exposed for 48 hours to the product, or LC₅₀ 48h, of 223.7 ppm. This result is considered as a Low acute toxicity.

In addition, the invention also points to the method of obtaining the polymeric matrix modifying composition, which comprises the following steps:
(a) providing a solution of modified lignin in an alkaline medium in a concentration between 2 and 30% by weight;
b) maintaining it at a temperature between 20 and 70 °C with gentle stirring;
c) adding dripwise an organic salt of a bivalent or trivalent cation;
d) maintaining it with stirring between 1 and 24 hours;
(e) separating the precipitate from the solvent and washing;
(f) drying in an oven at a temperature between 40 and 80 °C;
g) optionally adding formulation aids during or after the d) stirring stage; to obtain the composition of the invention.

Where the bivalent or trivalent cation is chosen between Ca, Mg, Zn, Fe, Al, Cu, Ni, Mo, and/or Mn and lignin is chosen between organosolv lignin, Kraft lignin, soda lignin, or derivatives of these.

In a third aspect, the invention refers to the use of the polymeric matrix modifying composition to confer anticorrosive properties, biocidal properties and mechanical improvement to polymeric matrices, when said composition is mixed with the polymer matrix before curing. Where the composition is mixed in a final proportion of between 0.1 to 5% w/w with respect to the uncured polymer matrix.

The polymer matrix is chosen between thermosetting and thermoplastic polymers. Where polymer resins within the thermosetting category are chosen between epoxy resins, polyurethane, polyurea, acrylic and/or polysiloxane, those that are used as paints, varnishes or coatings; and these polymer resins, once cured and forming a coating, have biocidal, anticorrosive, hardness and adhesion properties improved with respect to the resin without the composition.

On the other hand, plastics are chosen between, PET, PP, HDPE, LDPE, ABS, PVC, polycarbonate, nylon, PVA and/or PLA which are used to manufacture everyday objects; and where plastics, once cured and forming objects, have biocidal, anticorrosive, hardness and adhesion properties that are improved compared to plastic without the composition.

The composition of the invention forms a structure where the polymer of vegetable origin, modified lignin, is linked by the formation of a complex of great stability with the bi- or trivalent cations, which determines that the composition is insoluble in water and that it has a very low solubility in polar solvents in general. This represents a significant advantage over highly hazardous or toxic inhibitors, which are soluble in polar solvents such as water, leading to leaching over time from the polymer matrix. This differentiates the formulation of the invention of lignin with monovalent cations, such as sodium, which is partially soluble in water, and whose affinity with water leads to a water absorption of up to 15-20 w/w% under conditions of relative humidity between 40-90°C at room temperature, generating defects in protective films formed from polymeric matrices.

On the other hand, the chemistry of this polymer matrix modifying composition allows an adequate incorporation into an organic coating, since it presents a limited reaction with the polymer matrix during its preparation, application and curing, maintaining its inhibitory properties once the protective film is formed. In addition, it is available in the form of particulate matter or dispersion with particle sizes ranging from 50 nm to 100 microns.

This polymeric matrix modifying composition acts against the generation of corrosion processes, either by the generation of damage to the organic coating or the formation of defects that allow the diffusion of corrosive agents towards the metal surface. When corrosion occurs, metal ions are generated as a result of the oxidation reaction of the metal element, which induces an ion exchange reaction assisted by changes in concentration and pH in the defect area as a result of the oxidation-reduction reactions. At that moment the organometallic complex of lignin and cation according to the composition of the invention dissociates, so that the organic fraction of lignin is released, generating the surface passivation through physical and primarily chemical adsorption, forming a compact precipitate that covers the anode sites during corrosion. On the other hand, the metal cation is capable of reacting by cathodic inhibition, delaying the generation of the cathodic reaction, which stops the corrosive process. This cannot occur with lignin with monovalent cations which, being partially soluble in water, leaches before corrosion occurs. On the other hand, the coordination of the organic compound with its inorganic counterpart seeks to limit the affinity of the molecular structure with polar solvents (in particular its hygroscopic behavior), whose interaction is recovered at the time of the dissociation of the complex, leaving the polar functional groups available to act as chemical adsorption sites on the metal surface. In addition, the use of lignin or its derivatives allows the coating to be given greater mechanical resistance, due to the hardness of the complex formed, as well as greater resistance to UV exposure, due to the properties of the molecular structure of the lignin.

The polymeric matrix modifying composition of the invention in conjunction with a polymer resin from the epoxy group of resins, polyurethane, polyurea, acrylic, polysiloxane, allow the formation of a modified coating useful to prevent corrosion of metal surfaces. As we have already indicated, the vegetable origin of the precursors contained in the composition reduces its potential risk to the health of people who come into contact with it, both within the manufacturing process of paints and coatings, and in its use during application on metal surfaces.

It should be noted that the composition of the invention is used as an additive at very low concentrations, of 5%, 1% or even less, managing to generate the inhibitory effect of corrosion, biocide, and modifier of mechanical properties, which contrasts with the corrosion inhibitors available on the market that must be used in much higher proportions.

### APPLICATION EXAMPLES

The following examples are a demonstration of the applicability of the development presented here, but it is not intended to limit the scope of the technology to these cases.

### Example 1: Preparation of the composition of the invention.

Compositions were prepared according to the invention, specifically compositions comprising the M-Lignin-Kraft organometallic complexes, where M is a metal cation that was chosen between Zn, Cu, Mn, Mg, and Al.

Each complex, which constitutes the composition of the invention, was synthesized from 10g of Kraft lignin, which were dissolved in distilled water with a total volume of 100 ml, adjusting their initial pH to pH 12.

This solution was kept at a temperature of 50°C and, subsequently, 50ml of a 0.1M solution of compounds with the cation of interest, or precursor compounds, was added dripwise.

After the addition of the precursor, each solution was kept in magnetic stirring for 4 hours. Subsequently, the solutions are allowed to decant for at least 8 hours, the sedimentation of the dark brown precipitate obtained during the reaction was observed. The supernatant was removed and the precipitate was separated by centrifugation and then washed with distilled water, since the compounds of the invention are insoluble in water, the counterions or compounds are washed away without reacting.

Each resulting compound was dried in an oven at 50°C for 24 hours.

The precursor compounds in each case were the following: zinc acetate (Zn(CH₃CO₂)₂), for the Zn²⁺ cation; copper sulfate pentahydrate (CuSO₄ 5H₂O), for the Cu²⁺ cation; manganese sulfate monohydrate (MnSO₄ H₂O), for the Mn²⁺ cation; magnesium nitrate hexahydrate (Mg(NO₃)₂ 6H₂O), for the Mg²⁺ cation and aluminum nitrate nonahydrate (Al(NO₃)₃) 9H₂O), for the Al³⁺ cation.

To confirm the correct incorporation, the content of metal ions in the compounds formed was determined, achieving a content of 23.4% of Zn; 15.5% of Cu; 2.8% of Mn; 2.7% of Mg and 2.5% of Al, all expressed as a percentage by weight.

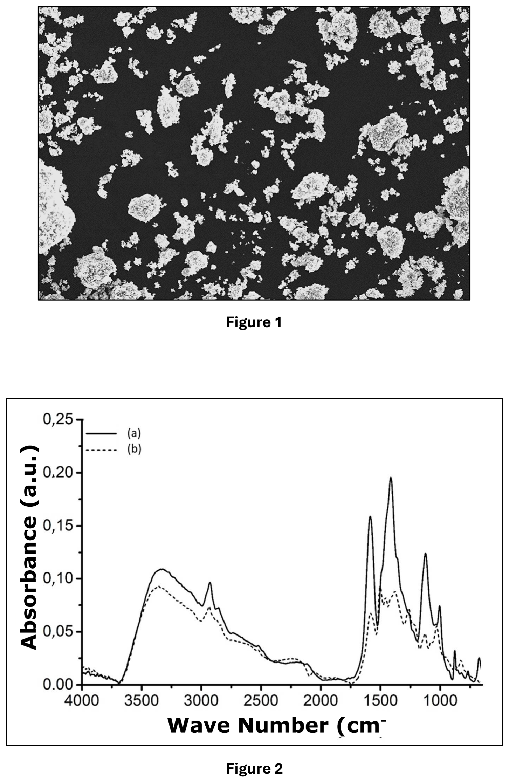

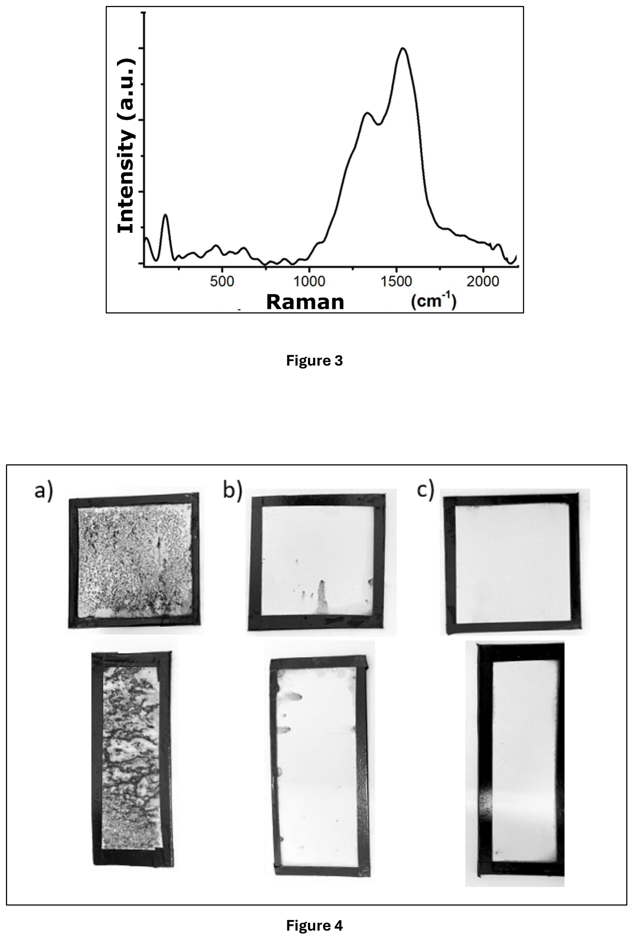

The particles obtained by the synthesis method described above were observed by scanning electron microscopy, which is presented in Figure 1. It is observed that the particle size varied between 2-100 µm. To verify the formation of the organometallic complex, the compound and its organic precursor were analyzed by infrared spectroscopy and Raman spectroscopy, which is presented in Figures 2 and 3. The infrared spectrum of lignin presents the eigenpeaks at 3,330; 1,596; 1.413 and 1.122 ^{cm-1}, which correspond to the vibration of the OH group, the aromatic groups of lignin and the C-O and C=O vibrations, respectively. The spectrum of the complex shows a slight displacement of the band at 3,350 ^{cm-1} and the appearance of a peak at 857 ^{cm-1}, which is associated with the coordination of the metal ion with the hydroxyl groups of lignin. This was reaffirmed by the presence of a peak between 150 and 250 ^{cm-1} in the Raman spectrum of the complex, which indicates the formation of a metal-oxygen bond, associated with the coordination of Zn with the functional groups of the lignin structure.

### Example 2: Anticorrosive property of the composition of the invention as an additive in an epoxy coating.

To evaluate the anticorrosive capacity of the composition of the invention, prepared as noted in Example 1, a two-component solvent-based epoxy coating was prepared, on top of which the composition of the invention was added, specifically the Lignin-based compound of Kraft-Zinc. For comparative purposes, a control made up of the resin without additive (BI) was used.

2 compositions were prepared according to the invention, where 0.5% of the composition of the invention (LgZn-05) was added to the epoxy coating and another formulation to which 1.0% of the composition of the invention was added (LgZn-10).

To evaluate the anticorrosive effect, A36 carbon steel panels of dimensions 150x70 and 100x100 mm were painted, with each of the coatings prepared, Control (Bl), zinc lignin 0.5% (LgZn-05) and zinc lignin 1.0% (LgZn-10).

The panels thus painted were exposed for 336 hours in a salt spray chamber, in accordance with the specifications of the ASTM B117 standard. **Figure 4** shows the painted plates after exposure in a salt spray chamber. A significant degree of corrosion was observed in the panel painted with the control formulation, **Figure 4a** ). In contrast, the panels painted with formulations with additions of the anticorrosive composition of the invention presented a better condition, with a limited percentage of the surface with the presence of rust for the LgZn-05 sample, **Figure 4b** ) and a rust-free surface in the case of the LgZn-10 formulation, **Figure 4c** ).

In this way, there is evidence of a substantial improvement in the anticorrosive protection capacity of the epoxy resin modified with the composition of the invention.

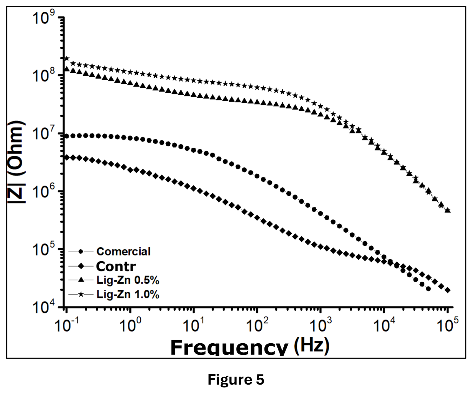

To complement the visual evaluation, the analysis of the painted panels was performed by electrochemical impedance spectroscopy, the results of which are shown in **Figure 5****.** The comparison between BI and LgZn-10 can be observed, observing a difference of at least 1 order of magnitude in the impedance value at a frequency of 0.1Hz. In the region of higher frequency, it is observed that the curves present similar behavior, with only a difference in the impedance value being visible at low frequencies. This indicates the formation of an additional layer between the coating and the metal substrate, which is ascribed to the formation of a compact film through the formation of ferrous complexes.

This is objective evidence of the effect of the composition of the invention as a corrosion inhibitor.

### Example 3: Mechanical property enhancer of the composition of the invention as an additive in an epoxy coating.

A bi-component epoxy paint with an addition of 1% of the additive LgZn-10 was formulated and the mechanical properties of adhesion and hardness were studied by the standard tests of shear adhesion and pencil hardness. The test was carried out on a metal panel coated with the epoxy paint LgZn10, where lead pencils of different hardness are scratched on the dry coating and the damage caused in each case is evaluated.

In both cases, an excellent response was obtained, achieving an adhesion classification of 5B, which indicates that 0% of the tested area was removed during the adhesion test by cutting, which corresponds to the classification of best results. Similarly, the pencil hardness test yielded a hardness result of 10H, which is the highest hardness within the scale, ranging from 6B (the lowest hardness) to 10H (the hardest).

**Table 1.- Results of mechanical tests on an epoxy formulation including the composition of the invention at a concentration of 1%**

| | Norm | Result |
|---|---|---|
| Pencil Hardness | ASTM D3363 | 10 H |
| Shear Adhesion | ASTM D3359 | 5B |

Using the same formulation presented above, an accelerated aging study was carried out according to ISO 12944-6 to evaluate the anticorrosive resistance by exposure in an exit cloud chamber for 720 hours, based on ISO 9227. Among the results is the visual evaluation based on the ISO 4628 standard, within which the defects found due to corrosion during the accelerated aging test are classified. It was observed that the incorporation of the complex stops the advance of corrosion under the coating during exposure in a salt spray chamber, as obtained based on the ISO 4628-8 standard.

**Table 2.- Results of anticorrosive resistance after accelerated aging tests in salt spray chamber**

| | Norm | Control | Control + LgZn-10 |
|---|---|---|---|
| Corrosion Grade, from Cut | ISO 4628-8 | 2.5 mm | 1.3 mm |
| Degree of Cracking | ISO 4628-4 | 0(S0) | 0(S0) |
| Degree of Scaling | ISO 4628-5 | 0(S0) | 0(S0) |

Where Control is the two-component epoxy paint.

### Example 4: Antimicrobial activity of the composition of the invention as an additive in an acrylic coating.

The formulation of an acrylic-based coating was made using the additive of the invention, to evaluate its properties as an antimicrobial agent and its effect was compared with a commercial biocide, based on silver, in addition to a formulation using unmodified lignin as a reference, that is, Kraft lignin without undergoing the process of the invention. The formulations were studied by means of a test under the ISO 22196 standard, with which the colony-forming units on a surface are quantified and what their evolution is over time when in contact with the antimicrobial surface.

The control is the acrylic coating, and the additives: commercial, unmodified lignin, and the formulation of the LgZn-10 invention, were added in a final concentration of 1%.

The following tables 3 and 4 present the results of the antimicrobial activity of the paints formulated using the strains *Escherichia coli* and *Staphylococcus aureus.* It can be seen that in both cases the commercial biocide presents low or no antimicrobial activity at short contact times, with inhibition possible for times greater than 24 hours. A similar case is observed for the formulation including unmodified lignin, achieving 92% inhibition in the case of *Staphylococuss,* but no inhibition of *Escherichia coli* after 2 hours. On the contrary, a much greater inhibition is achieved by the composition of the invention for both strains, achieving a greater inhibition by up to 2 orders of magnitude compared to the rest of the formulations. For both strains, inhibition is 100% in the case of the latter formulation.

With this, it is possible to demonstrate not only the inhibition over long periods, but it is important to highlight the rapid antimicrobial action, equaling or improving the results obtained by copper- and/or silver-based additives reported in the literature. This effect is achieved with a low dose of up to 0.3%.

**Table 3.- Evaluation of antimicrobial efficacy against the Escherichia coli strain**

| | Initial Concentration | Concentration 2 hours | Concentration 24-hours |
|---|---|---|---|
| Control | 4.7 x 10⁶ cfu/ml | 1.4 x 10⁶ cfu/ml (70.2127%) | <10 cfu/ml (100%) |
| Control + Commercial Biocide | 4.7 x 10⁶ cfu/ml | 4.7 x 10⁶ cfu/ml (0%) | <10 cfu/ml (100%) |
| Control + Lignin | 4.7 x 10⁶ cfu/ml | 4.7 x 10⁶ cfu/ml (0%) | <10 cfu/ml (100%) |
| Control + LgZn-10 | 4.7 x 10⁶ cfu/ml | 1.2 x 10⁵ cfu/ml (97,4468%) | <10 cfu/ml (100%) |

**Table 4.- Evaluation of antimicrobial efficacy against the Staphylococcus aureus strain**

| | Initial Concentration | Concentration 2 hours | Concentration 24-hours |
|---|---|---|---|
| Control | 3.0 x 10⁶ cfu/ml | 3.9 x 10⁴ cfu/ml (98,700%) | <10 cfu/ml (100%) |
| Control + Commercial Biocide | 3.0 x 10⁶ cfu/ml | 3.8 x 10⁵ cfu/ml (87,333%) | 20 cfu/ml (99.99981%) |
| Control + Lignin | 3.0 x 10⁶ cfu/ml | 2.4 x 10⁵ cfu/ml (92,000%) | <10 cfu/ml (100%) |
| Control + LgZn-10 | 3.0 x 10⁶ cfu/ml | 2.2 x 10³ cfu/ml (99,926%) | <10 cfu/ml (100%) |

## Claims

1. Polymeric matrix modifying composition **characterized in that** it comprises:
- between 50 and 99% of an organic fraction consisting of lignin, which is chosen from organosolv lignin, Kraft lignin, soda lignin, and/or their derivatives
- between 1 and 40 % of bivalent or trivalent inorganic cations
between 0 to 10% of formulation aids.

2. A composition according to claim 1 **characterized in that** the inorganic cation being within the following group of elements: Ca, Mg, Zn, Fe, Al, Cu, Ni, Mo, and/or Mn.

3. A composition in accordance with claim 1, **characterized in that** the modified lignin is Kraft lignin or its derivatives.

4. Method of obtaining a composition in accordance with claim 1, **characterized in that** it comprises:
(a) providing an aqueous solution of modified lignin in alkaline medium in a concentration between 2 and 30% by weight;
b) maintaining it at a temperature between 20 and 70 °C with gentle stirring;
(c) Adding dripwise an organic salt of a bivalent or trivalent cation;
d) incubating with stirring between 1 and 24 hours;
(e) separating the precipitate from the solvent and washing;
(f) drying in an oven at a temperature between 40 and 80 °C;
g) optionally adding formulation aids during or after the d) stirring stage, to obtain the composition of the invention.

5. Method according to claim 4, **characterized in that** the bivalent or trivalent cation is chosen between salts of Ca, Mg, Zn, Fe, Al, Cu, Ni, Mo, and/or Mn.

6. Method according to claim 4, **characterized in that** the modified lignin is chosen between organosolv lignin, Kraft lignin, soda lignin, or derivatives of these.

7. Use of a polymeric matrix modifying composition in according to claim 1 **characterized in that** it serves to provide anticorrosive, biocidal and/or improvement of mechanical properties to polymeric matrices, when the composition is mixed homogeneously with the polymer matrix before curing.

8. Use according to claim 7 **characterized in that** the polymeric matrix modifying composition is mixed in a final proportion of between 0.1 and 5% w/w with respect to the uncured polymer matrix.

9. Use according to claim 8 **characterized in that** the polymer matrix is chosen between thermosetting and/or thermoplastic polymers

10. Use according to claim 9 **characterized in that** the polymer resins are chosen between thermosetting polymers such as epoxy resins, polyurethane, polyurea, acrylic and/or polysiloxane, those used as paints, varnishes or coatings.

11. Use according to claim 10 **characterized in that** the polymeric resins, once cured and forming a coating, have biocidal, anticorrosive, hardness and/or adhesion properties improved with respect to the resin without the composition.

12. Use according to claim 9 **characterized in that** the thermoplastic polymers are chosen from among the following types, PET, PP, HDPE, LDPE, ABS, PVC, polycarbonate, nylon, PVA and/or PLA, which are used to manufacture objects of daily industrial or domestic use.

13. Use according to claim 12 **characterized in that** the plastics, once cured and forming objects, have biocidal, anticorrosive, hardness and/or adhesion properties that are improved compared to plastic without the composition.
